# EUROPÄISCHE PATENTSCHRIFT

(11) **EP 1 347 213 B1**
(45) Veröffentlichungstag und Bekanntmachung des Hinweises auf die Patenterteilung: **07.11.2012**
(21) Anmeldenummer: 03005768.1
(22) Anmeldetag: 14.03.2003
(51) Int. Cl.: F16H 59/08, F16H 61/22, F16H 61/16

(54) **Kraftfahrzeug mit einem über ein shift-by-wire-System geschalteten Automatikgetriebe**
Vehicle with shift by wire automatic transmission
Véhicule automobile équipé d'une boîte de vitesses automatique de type "shift by wire"

(30) Priorität: 22.03.2002 DE 10212777
(43) Veröffentlichungstag der Anmeldung: 24.09.2003
(73) Patentinhaber: AUDI AG, 85045 Ingolstadt (DE)
(72) Erfinder: Gabler, Stephan, 85131 Preith (DE)
(74) Vertreter: Thielmann, Frank

(56) Entgegenhaltungen:
- EP-A- 1 182 381
- EP-A1- 0 324 878
- DE-A1- 10 024 920
- DE-A1- 19 946 559

## Beschreibung

Die Erfindung betrifft ein Kraftfahrzeug mit einem über ein shift-by-wire-System geschalteten Automatikgetriebe, wobei das shift-by-wire-System eine Einrichtung zur elektronischen Fahrerwunscherfassung in Form eines den Schaltvorgang erwirkenden Fahrstufensignals umfasst.

Bei Kraftfahrzeugen mit Automatikgetriebe mit konventioneller Schaltbetätigung, bei der das Einlegen einer Fahrstufe, also entweder R oder D ausgehend von der Position P oder N über den Automatikhebel in Verbindung mit einer mechanischen Seilzugkopplung zum Getriebe erfolgt, ist das Einlegen der Fahrstufe nur bei getretenem Bremspedal möglich. Dabei sperrt oder entsperrt ein Magnet, der von der Getriebeelektronik angesteuert wird, den Wählhebel, der über den Seilzug mit dem Getriebe verbunden ist, in den Grundpositionen P oder N, also der Park- oder der Leerlaufposition. Durch die direkte mechanische Verbindung von Wählhebel und Getriebehydraulik führt das Einlegen der Fahrstufe D unweigerlich zu einem kraftschlüssigen Getriebe. Deswegen muss der Fahrer beim Gangeinlegen bewusst die Bremse treten, um ein ungewolltes Wegrollen zu verhindern.

Bei Kraftfahrzeugen mit einem über ein shift-by-wire-System gesteuerten Automatikgetriebe existiert kein Seilzug mehr zwischen der Fahrerwunscherfassung und dem Getriebe. Vielmehr ist dort eine elektronische Fahrerwunscherfassung realisiert, bei der der Fahrer über ein geeignetes Eingabemittel am Lenkrad oder dergleichen die einzulegende, also gewünschte Fahrstufe eingibt. Dieser Wunsch wird in Form eines Befehls als Fahrerwunschsignal an eine Steuerungseinrichtung beziehungsweise an einen Aktuator (z.B. einen kleinen Elektromotor, einen Hydraulikzylinder etc.) gegeben, der von der intelligenten Steuerung angesteuert wird. Dieser nimmt dann das Einlegen der Fahrstufe vor.

Wird die Fahrstufe eingelegt so wird hierdurch auch bei einem shift-by-wiregeschalteten Automatikgetriebe eine kraftschlüssige Getriebestellung erreicht, die zu einem langsamen Anrollen des Fahrzeugs führt, wenn der Fahrer nicht gleichzeitig die Bremse betätigt. Die gleichzeitige Betätigung der Bremse wird jedoch in der Regel als umständlich und damit Nachteilig empfunden. Im Übrigen ist es derzeit generell notwendig, die Bremse zu bestätigen, um überhaupt eine kraftschlüssige Fahrstufe einlegen zu können (shiftlock-Funktion).

Dokument DE 100 24 920 A offenbart ein Kraftfahrzeug mit einem über ein System geschalteten Automatikgetriebe, wobei das System eine Einrichtung zur elektronischen Fahrerwunscherfassung in Form eines den Schaltvorgang erwirkenden Fahrstufensignal umfasst, wobei der Schaltvorgang zum Einlegen einer vom Fahrer über die Einrichtung zur Fahrerwunscherfassung gewählte Fahrstufe in Abhängigkeit wenigstens eines zusätzlich zum Fahrstufensignal zu erfassenden Freigabesignals erfolgt, wobei das Freigabesignal innerhalb eines vorbestimmten Zeitintervalls nach Erfassung des Fahrstufensignals zu geben ist und bei Fehlen des Freigabesignals eine Zurückbewegung des Wählhebels auf N und ein erneutes Wählen erforderlich ist.

Der Erfindung liegt damit das Problem zugrunde, das Zuschalten einer Fahrstufe bei einem shift-by-wire-geschaltetem Automatikgetriebe komfortabler zu gestalten.

Zur Lösung dieses Problems ist bei einem Kraftfahrzeug der eingangs genannten Erfindung erfindungsgemäß vorgesehen, dass der Schaltvorgang zum Einlegen einer vom Fahrer über die Einrichtung zur Fahrerwunscherfassung gewählten Fahrstufe in Abhängigkeit wenigstens eines zusätzlich zum Fahrstufensignal zu erfassenden Freigabesignals erfolgt.

Beim erfindungsgemäßen Kraftfahrzeug wird also vorteilhaft die Fahrstufe nur dann eingelegt, wenn zusätzlich zum Fahrstufensignal mindestens ein weiteres Freigabesignal erfasst und beispielsweise dem shift-by-wiresystemeigenen Steuergerät gegeben wird. Das Fahrstufensignal, also der unmittelbare Fahrerwunsch führt noch nicht zum Einlegen der Fahrstufe, vielmehr muss die genannte Bedingung erfüllt sein, damit das Fahrstufensignal abgearbeitet werden kann. Hier erfolgt also unter Ausnutzung der intelligenten Elektronik des shift-by-wire-Systems die mit einer Schaltbedingung belegte Steuerung des Getriebeschaltbetriebs, ohne dass der Fahrer hierfür wie bis dato bekannt zwingend das Bremspedal betätigen muss. Die Äußerung des Fahrerwunsches, also das Anwählen der gewünschten Fahrstufe ist dabei zu jeder Zeit möglich, die Abarbeitung steht jedoch unter der genannten Bedingung, dass das Freigabesignal gegeben ist.

Um sicherzustellen, dass das Einlegen der Fahrstufe auch tatsächlich mit Wissen und Wollen des Fahrers erfolgt, sieht eine vorteilhafte Weiterbildung der Erfindung vor, dass das Freigabesignal vom Fahrer durch Betätigen eines das Freigabesignal direkt oder mittelbar liefernden Betätigungselements zu geben ist. Der Fahrer muss also zur Gabe des Freigabesignals aktiv handeln, so dass der Schaltbetrieb vom Fahrer bewusst ausgelöst wird.

Hierfür sieht eine erste Erfindungsalternative vor, dass das Betätigungselement das Gaspedal ist. Tritt also der Fahrer nach Anwählen der gewünschten Fahrstufe, also nach Erzeugen des Fahrstufensignals auf das Gaspedal, so kann diese Pedalbetätigung mittels eines Sensors erfasst werden, es liegt hier also eine mittelbare Gabe des Freigabesignals vor. Das Steuergerät des shift-by-wire-Systems steuert nun den Aktuator zum Einlegen der gewünschten Fahrstufe an, da die Bedingung, nämlich Vorliegen eines Fahrstufensignals und gleichzeitig eines Freigabesignals erfüllt ist. Dabei ist es zweckmäßig wenn das Freigabesignal erst bei einer Bewegung des Gaspedals um eine vorgegebene Wegstrecke gegeben wird, so dass nicht jede auch noch so minimale Bewegung des Gaspedals sofort zum Schaltvorgang führt. Beispielsweise kann das Freigabesignal erst bei einer Betätigung von 5 % oder mehr des maximalen Weges des Gaspedals gegeben werden. Weiterhin ist es zweckmäßig, wenn eine Begrenzung oder eine zeitliche Verzögerung der Erhöhung der Motordrehzahl oder eine Momentenbegrenzung bei einer Betätigung des Gaspedals bis zum Einlegen der Fahrstufe realisiert ist. Dies verhindert, dass der Motor bei einem sehr schnellen Durchtreten des Gaspedals bis zum Einlegen der Fahrstufe schon sehr hoch dreht, was zu einem sehr ruckartigen Anfahren und mithin zu einer übermäßigen Motorund Getriebebelastung führt. Wird hingegen die Drehzahlerhöhung entweder begrenzt oder zeitlich verzögert, bis die Fahrstufe eingelegt ist und erst anschließend die Drehzahlerhöhung vorgenommen, ist in jedem Fall ein sanftes Anfahren möglich.

Eine Alternative zur Verwendung des Gaspedals als Betätigungselement sieht vor, als ein solches eine Betätigungstaste oder einen Betätigungsschalter vorzusehen. Diese Taste kann ebenfalls beispielsweise lenkradseitig unmittelbar benachbart zur Taste zur Fahrerwunscherfassung angeordnet sein, auch besteht die Möglichkeit, z.B. die Fahrerwunscherfassungstaste selbst hierfür zu verwenden. Dies kann beispielsweise derart realisiert werden, dass die Fahrerwunscherfassung zeitlich kurz hintereinander zweimal zu betätigen ist. Die erste Betätigung dient zur Gabe des Fahrstufensignals, die zweite zur Bestätigung des Fahrstufensignals, eben in Form des Freigabesignals. Hier sind beliebige Modifikationen denkbar.

Eine dritte zweckmäßige Erfindungsalternative sieht vor, ein Ton- oder Spracherfassungssystem zum Erzeugen des Freigabesignals zu verwenden. Dieses System erfasst zum Beispiel einen Sprachbefehl des Fahrers, der beispielsweise akustisch die am Fahrerwunscherfassungssystem gewählte Fahrstufe wiederholen muss, das heißt er muss zum Beispiel "D" in unmittelbar zeitlichen Zusammenhang mit der Wahl der Fahrstufe sagen. Diese akustische Äußerung wird vom z.B. bei Gabe des Fahrerwunschsignals automatisch aktivierten Ton- oder Spracherfassungssystem erfasst und hierauf basierend das Freigabesignal erzeugt. Hierüber kann auch beispielsweise eine Plausibilitätsprüfung erfolgen. Gibt der Fahrer beispielsweise als Fahrerwunsch "R" ein, sagt er aber im Rahmen der Gabe des Freigabesignals "D" so scheint hier eine Unstimmigkeit vorzuliegen. Es kann der Fahrer dann auf diese Unstimmigkeit entsprechend aufmerksam gemacht werden, z.B. durch eine akustische oder eine optische Anzeige oder der gleichen. Das Einlegen der Fahrstufe unterbleibt in einem solchen Fall.

Eine zweckmäßige Weiterbildung des Erfindungsgedanken sieht vor, dass das Freigabesignal innerhalb eines vorbestimmten Zeitintervalls nach Erfassung des Fahrstufensignals zu geben ist, wobei bei Fehlen des Freigabesignals eine Rücksetzung des Fahrerwunschs erfolgt. Das Freigabesignal muss also z.B. innerhalb von zwei Sekunden nach dem Anwählen der gewünschten Fahrstufe gegeben werden, ansonsten erfolgt die Rücksetzung des Fahrerwunsches, die optische Anzeige der gewählten Fahrstufe, z.B. "D", wird wieder auf die Ausgangstellung ("P" oder "N") gesetzt.

Zweckmäßig ist es, wenn eine Speichereinrichtung zum Zwischenspeichern des Fahrstufensignals vorgesehen ist, aus der das Fahrstufensignal bei Vorliegen des Freigabesignals ausgelesen oder in dem das Fahrstufensignal bei Fehlen des Freigabesignals gelöscht wird.

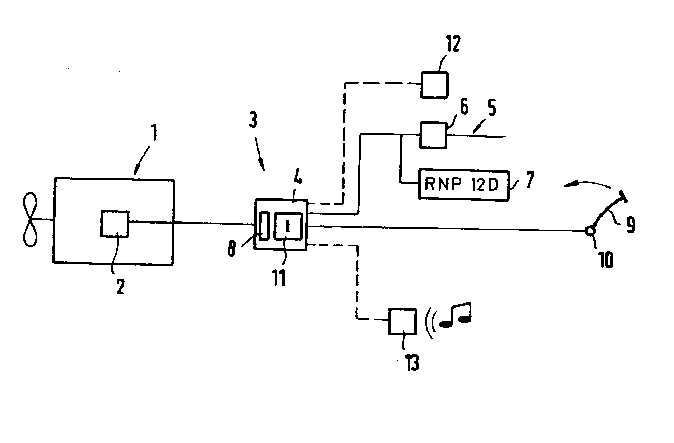

Weitere Vorteile, Merkmale und Einzelheiten ergeben sich aus dem im Folgenden beschriebenen Ausführungsbeispiel sowie anhand der Zeichnung.

Diese zeigt in Form einer Prinzipskizze die wesentlichen Komponenten eines erfindungsgemäßen Kraftfahrzeugs, wobei hier nur diejenigen Elemente dargestellt sind, die zum prinzipiellen Durchführen des erfindungsgemäßen Schaltverfahrens erforderlich sind.

Gezeigt ist ein Automatikgetriebe 1, dem ein Aktuator 2 zugeordnet ist, der zum Einlegen der gewünschten Fahrstufe dient. Dieser Aktuator ist Teil eines shift-by-wire-Systems 3. Sein Betrieb wird über ein Steuergerät 4 des shift-by-wire-Systems gesteuert.

Ausgehend von den Fahrstufen "N" oder "P", in denen keine kraftschlüssig gekoppelte Fahrstufe im Automatikgetriebe 1 eingelegt ist, wählt der Fahrer nun an der Fahrerwunscherfassung 5 die gewählte und einzulegende Fahrstufe aus. Hierzu betätigt er beispielsweise eine Fahrerwunscherfassungstaste 6. Die gewünschte Fahrstufe, also z.B. "D", wird ihm an einer geeigneten Anzeigeeinrichtung 7, z.B. in Form eines LCD-Display's oder dergleichen angezeigt. Das Betätigen der Fahrerwunscherfassungstaste 6 führt dazu, dass ein dem Fahrerwunsch entsprechendes Fahrstufensignal erzeugt wird, das an das Steuergerät 4 gegeben wird und dort in einem Speicher 8 zwischengespeichert wird.

Wenngleich der Fahrerwunsch geäußert wurde und das Fahrstufensignal seitens des Steuergeräts vorliegt wird der Aktuator 2 dennoch noch nicht angesteuert. Dies erfolgt erst, wenn ein Freigabesignal an das Steuergerät 4 gegeben wird, das quasi den Fahrerwunsch bestätigt. Zur Gabe des Freigabesignals sind unterschiedliche Möglichkeiten denkbar. In der Figur ist ein Gaspedal 9 gezeigt, das bekanntermaßen zum Erhöhen oder Reduzieren der Motordrehzahl zu betätigen ist. Wenn der Fahrer nun das Gaspedal betätigt, nachdem er den Fahrerwunsch geäußert hat, so wird diese Betätigung über ein geeignetes Sensorelement 10 erfasst und hierauf das Freigabesignal erzeugt, das an das Steuergerät 4 gegeben wird. Da nun die zum Ansteuern des Aktuators 2 definierte Bedingung, nämlich das Vorliegen eines Fahrstufensignals und das gleichzeitige Vorliegen eines Freigabesignals erfüllt ist, wird der Aktuator 2 über das Steuergerät 4 angesteuert und die gewünscht Fahrstufe eingelegt. Das Kraftfahrzeug kann nun mit der gewünschten Fahrstufe losfahren.

Die Gabe des Freigabesignals durch Betätigen des Gaspedals 9 kann der Gestalt konzeptioniert sein, dass das Gaspedal 9 um einen definierten Mindestweg bezogen auf die Gesamtbewegungsstrecke zu betätigen ist, bevor das Freigabesignal vom Sensorelement 10 erzeugt wird. Hierdurch wird sichergestellt, dass nicht jede auch noch so geringe Betätigung des Gaspedals 9 zur Gabe des Freigabesignals führt. Ferner ist im Steuergerät 4 ein Zeitglied 11 vorgesehen, welches dann angestoßen wird, wenn das Fahrstufensignal an das Steuergerät 4 gegeben wird. Die Auslegung des Steuergeräts 4 kann nämlich derart sein, dass das Freigabesignal innerhalb eines bestimmten Zeitintervalls gegeben werden muss, damit das Fahrstufensignal abgearbeitet und die gewünschte Fahrstufe eingelegt werden kann. Erfolgt die Gabe nicht rechtzeitig so wird das in der Speichereinrichtung 8 abgelegt Fahrstufensignal wieder gelöscht, die gewünschte Fahrstufe wird nicht eingelegt und an der Anzeigeeinrichtung 7 wird wieder die ursprüngliche Fahrstufe (also "N" oder "P") angezeigt. Hierdurch wird sichergestellt dass, die Gabe des Fahrstufensignals und die Gabe des Freistufensignals in einem vorgegebenen zeitlichen Zusammenhang erfolgen müssen, damit der Schaltbetrieb erfolgt. Der Fahrer muss hier also zweimal bewusst handeln. Das vorgegebene Zeitintervall wird über das Zeitglied 11 erfasst. Beispielsweise kann hierüber ein Zeitintervall von zwei Sekunden oder von fünf Sekunden definiert werden, innerhalb welchem das Freigabesignal gegeben werden muss.

Eine weitere Alternativmöglichkeit zur Gabe des Freigabesignals sieht vor, hierzu eine Betätigungstaste 12 vorzusehen, die wie gestrichelt dargestellt ist ebenfalls mit dem Steuergerät 4 verbunden ist. Diese Betätigungstaste 12 ist zweckmäßigerweise benachbart zur Fahrerwunscherfassungstaste 6 angeordnet, so dass sie der Fahrer einfach betätigen kann. Der Fahrer muss also zum einen die Fahrerwunscherfassungstaste 6 und im richtigen zeitlichen Zusammenhang auch die Betätigungstaste 12 drücken, damit die erforderlichen Signale zeitgerecht an das Steuergerät 4 gegeben werden können.

Eine dritte Möglichkeit zur Erfassung des Freigabesignals sieht die Verwendung eines Ton- oder Spracherfassungssystems 13 vor, das ebenfalls wie gestrichelt dargestellt ist mit dem Steuergerät 4 gekoppelt ist. Dieses System erfasst eine akustische Äußerung des Fahrers, der hierfür z.B. den Buchstaben der gewünschten Fahrstufe sprechen muss und dergleichen. Das Steuergerät 4 kann hier zur Plausibilitätsprüfung ausgebildet sein, das heißt es überprüft, ob das Fahrstufensignal beziehungsweise die hierüber definierte und gewünschte Fahrstufe mit der gesprochenen Fahrstufe übereinstimmt. Falls dem so ist erfolgt bei korrekter zeitlicher Koordinierung der Signalgabe der Schaltbetrieb, falls nicht kann ein Alarmsignal oder dergleichen ausgegeben werden, um den Fahrer diese Unstimmigkeit anzuzeigen.

Eine vierte Erfindungsalternative liegt schließlich in der Möglichkeit, zur Gabe des Freigabesignals die Fahrerwunscherfassungstaste 6 selbst zu verwenden, die hierzu beispielsweise zweimal kurz hintereinander zu drücken ist.

## Patentansprüche

1. Kraftfahrzeug mit einem über ein shift-by-wire-System (3) geschalteten Automatikgetriebe, wobei das shift-by-wire-System (3) eine Einrichtung (5) zur elektronischen Erfassung eines Fahrstufenwunsches in Form eines den Schaltvorgang erwirkenden Fahrstufensignals umfasst, wobei der Schaltvorgang zum Einlegen einer vom Fahrer über die Einrichtung (5) zur elektronischen Erfassung eines Fahrstufenwunsches gewählten Fahrstufe in Abhängigkeit wenigstens eines zusätzlich zum Fahrstufensignal zu erfassenden Freigabesignals erfolgt, wobei das Freigabesignal innerhalb eines vorbestimmten Zeitintervalls nach Erfassung des Fahrstufensignals zu geben ist und bei Fehlen des Freigabesignals eine Rücksetzung des Fahrstufenwunsches derart erfolgt, dass eine optische Anzeige wieder auf die Ausgangsstellung gesetzt wird, wobei eine Speichereinrichtung (8) zum Zwischenspeichern des Fahrstufensignals vorgesehen ist, aus der das Fahrstufensignal bei Vorliegen des Freigabesignals ausgelesen oder in dem das Fahrstufensignal bei Fehlen des Freigabesignals gelöscht wird.

2. Kraftfahrzeug nach Anspruch 1,
**dadurch gekennzeichnet,**
**dass** das Freigabesignal vom Fahrer durch Betätigen eines das Freigabesignal direkt oder mittelbar liefernden Betätigungselements zu geben ist.

3. Kraftfahrzeug nach Anspruch 2,
**dadurch gekennzeichnet,**
**dass** das Betätigungselement das Gaspedal (9) ist.

4. Kraftfahrzeug nach Anspruch 3,
**dadurch gekennzeichnet,**
**dass** das Freigabesignal erst bei einer Bewegung des Gaspedals (9) um eine vorgegebene Wegstrecke gegeben wird.

5. Kraftfahrzeug nach Anspruch 3 oder 4,
**dadurch gekennzeichnet,**
**dass** eine Begrenzung oder zeitliche Verzögerung der Erhöhung der Motordrehzahl bei einer Betätigung des Gaspedals (9) bis zum Einlegen der Fahrstufe realisiert ist.

6. Kraftfahrzeug nach Anspruch 2,
**dadurch gekennzeichnet,**
**dass** das Betätigungselement eine Betätigungstaste (12) ist.

7. Kraftfahrzeug nach Anspruch 1,
**dadurch gekennzeichnet,**
**dass** ein Ton- oder Spracherfassungssystem (13) zum Erzeugen des Freigabesignals vorgesehen ist.

## Claims

1. Motor vehicle comprising an automatic transmission shifted via a shift-by-wire system (3), wherein the shift-by-wire system (3) comprises a device (5) for electronically detecting a gear request in the form of a gear signal effecting the gearshift, wherein the gearshift for engaging a gear which is selected by the driver via the device (5) for electronically detecting a gear request is carried out according to at least one release signal to be detected in addition to the gear signal, wherein the release signal is intended to be given within a predetermined time interval after the gear signal is detected and, if there is no release signal, the gear request is reset in such a way that an optical display is reset to the original position, wherein a storage device (8) temporarily storing the gear signal is provided, from which the gear signal is read if there is a release signal or from which the gear signal is erased if there is no release signal.

2. Motor vehicle according to claim 1, **characterised in that** the release signal is to be given by the driver by actuating an actuating element which directly or indirectly supplies the release signal.

3. Motor vehicle according to claim 2, **characterised in that** the actuating element is the accelerator pedal (9).

4. Motor vehicle according to claim 3, **characterised in that** the release signal is only given when the accelerator pedal (9) moves by a predetermined distance.

5. Motor vehicle according to either claim 3 or claim 4, **characterised in that** the increase in the rotational speed of the engine is limited or time-delayed when the accelerator pedal (9) is actuated, until the gear is engaged.

6. Motor vehicle according to claim 2, **characterised in that** the actuating element is an actuating button (12).

7. Motor vehicle according to claim 1, **characterised in that** a sound or language detection system (13) is provided for generating the release signal.

## Revendications

1. Véhicule automobile équipée d'une boîte de vitesses automatique commutée par un système (3) du type à changement par fil, dans lequel le système (3) à changement par fil comprend un dispositif (5) pour saisir électroniquement une demande de vitesse de conduite sous la forme d'un signal de vitesse de conduite assurant l'opération de commutation, dans lequel l'opération de commutation permettant d'introduire une vitesse de conduite choisie par le conducteur via le dispositif (5) pour la saisie électronique d'une demande de vitesse de conduite se fait en fonction d'au moins un signal de libération à saisir en plus du signal de vitesse de conduite, dans lequel le signal de libération doit être délivré dans un intervalle de temps prédéterminé après saisie du signal de vitesse de conduite et, en cas de défaillance du signal de libération, il se produit un rappel de la demande de vitesse de conduite de sorte qu'un affichage optique soit ramené en position de départ, dans lequel un dispositif de mémoire (8) est prévu pour la bufférisation du signal de vitesse de conduite à partir duquel le signal de vitesse de conduite est lu en présence du signal de libération ou dans lequel le signal de vitesse de conduite est coupé en l'absence du signal de libération.

2. Véhicule automobile selon la revendication 1,
**caractérisé en ce que**
le signal de libération doit être délivré par le conducteur par commande d'un élément de commande délivrant directement ou indirectement le signal de libération.

3. Véhicule automobile selon la revendication 2,
**caractérisé en ce que**
l'élément de commande est la pédale de gaz (9).

4. Véhicule automobile selon la revendication 3,
**caractérisé en ce que**
le signal de libération est délivré seulement lors d'un déplacement de la pédale de gaz (9) d'un trajet de course prédéfini.

5. Véhicule automobile selon la revendication 3 ou 4,
**caractérisé en ce que**
une limitation ou un retard temporel de l'augmentation de la vitesse du moteur est réalisé (e) lors d'une commande de la pédale de gaz (9) jusqu'à l'introduction de la vitesse de conduite.

6. Véhicule automobile selon la revendication 2,
**caractérisé en ce que**
l'élément de commande est une touche de commande (12).

7. Véhicule automobile selon la revendication 1,
**caractérisé en ce que**
un système de saisie de son ou de parole (13) est prévu pour produire le signal de libération.
